# EUROPEAN PATENT APPLICATION

(11) **EP 2 749 445 A1**
(43) Date of publication of application: **02.07.2014**
(21) Application number: 13199392.5
(22) Date of filing: 23.12.2013
(51) Int. Cl.: B60L 11/18, H02J 7/02, H01F 38/14, H02J 5/00

(54) **Inductive power supply system for electric operation machine**

(30) Priority: 28.12.2012 JP 2012286526
(71) Applicant: Hitachi Power Solutions Co., Ltd., Hitachi-shi, Ibaraki 317-0073 (JP)
(72) Inventor: Suzuki, Kunihito, Hitachi-shi, Ibaraki 317-0073 (JP); Goto, Fumihiko, Hitachi-shi, Ibaraki 317-0073 (JP); Sagawa, Junki, Hitachi-shi, Ibaraki 317-0073 (JP)
(74) Representative: MERH-IP Matias Erny Reichl Hoffmann

(57) **Abstract**

An object of the present invention is to provide an inductive power supply system for an electric operation machine capable of readily increasing an allowable amount of a positional displacement between primary and secondary coils.

An inductive power supply system for an electric operation machine having an electric storage device and a power receiver 41 includes a power feeder 51 provided with a pair of primary coils 11 and 12 connected in series circuit to generate a magnetic dipole at energization. The power receiver 41 has a secondary coil 13 interlinkable to a magnetic flux generated by the primary coils 11 and 12 at the energization of the primary coils 11 and 12.

## Description

### BACKGROUND OF THE INVENTION

### 1. Field of the Invention

The present invention relates to an inductive power supply system for an electric operation machine, which supplies power to an electrical storage device equipped in the electric operation machine using a mutual action of electromagnetic induction.

### 2. Description of the Related Art

As a power feeding system for an electric operation machine {e.g., a vehicle, a construction machinery (e.g., an excavator), an industrial machine (e.g., a fork lift truck)} equipped with an electrical storage device such as a secondary battery, there is known an inductive power supply system (contactless power feeding system) that supplies power from a primary coil (power-feeding coil) to a secondary coil (power-receiving coil) using a mutual action of electromagnetic induction without wire-connecting the electrical storage device to a power supply. An inductive power supply system (contactless power feeding device) for an electric operation machine needs high power (1 kW or more) unlike an inductive power supply system (e.g., International Patent Publication No. 2009/027674, Pamphlet) for a small-sized portable electronic device including a cellular phone.

This type of inductive power supply system has as one of the types one that is equipped with primary and secondary coils each formed by winding an electric wire flat and supplies power in a state in which the primary and secondary coils are coaxially arranged opposed to each other (e.g., JP-2008-87733-A). For example, when it is used in electric vehicles, a driver will lead a vehicle equipped with a secondary coil onto a primary coil to perform a charging work. Since, however, each vehicle has a different width, and each driver has a different driving skills and vehicle width sense, for example, it has been pointed out that a positional displacement (axial displacement) between the primary and secondary coils is liable to occur. When the positional displacement occurs, a magnetic flux going from the primary coil to the secondary coil is distorted, and hence, an induced current generated in the secondary coil is reduced. There therefore exists the risk of increasing a charging time and overheating the primary coil.

There is known one (JP-2011-49230-A) which uses a plate-like ferrite (ferrite plate) as a core and has substantially-rectangular flat primary and secondary coils each formed by winding a coil around the ferrite plate, as an inductive power supply system for an electric operation machine, which intends to increase an allowable amount of a positional displacement between the primary and secondary coils. In this technology, the central axis of each coil is parallel with the plate surface of the ferrite plate, and ferrite exposed portions of both coils are overlaid on each other while holding the central axes of both coils parallel, thereby feeding power. Using such substantially rectangular flat coils will increase the allowable amount of the positional displacement relative to the direction (referred to as "vehicle cross-machine direction" in the corresponding document) in which the coil is wound around the plate-like core.

### SUMMARY OF THE INVENTION

In the technology according to JP-2011-49230-A, the coil is wound around the plate-like core to increase the allowable amount of the positional displacement relative to its wound direction, and the allowable amount of the positional displacement can be increased as the plate width related to the winding direction of the coil is ensured long.

In this method, however, the size of the coil (ferrite plate) related to its winding direction will increase as the allowable amount of the positional displacement increases. That is, the power-receiving side device (secondary coil) arranged in the vehicle also is large as well as a massive increase in the power-feeding side device related to the winding direction. Since the power is fed in the state in which the central axes of the two coils are held substantially horizontal and parallel, it can also be pointed out that it is difficult to suppress a magnetic field that leaks from both ends of each coil, as compared with a system (e.g., a system of FIG. 14 in JP-2011-49230-A) in which two coils are coaxially disposed to feed power. Further, according to the technology of JP-2011-49230-A, it can also be pointed out that increase in the number of parts and weight can not be avoided because the plate-like core is estimated to be essential in terms of ensuring performance and a structural strength.

An object of the present invention is to provide an inductive power supply system for an electric operation machine capable of readily increasing an allowable amount of a positional displacement between primary and secondary coils.

In order to achieve the above object, the present invention provides an inductive power supply system for an electric operation machine that includes: a pair of primary coils that are connected in series circuit and generates a magnetic dipole at energization; a secondary coil mounted to the electric operation machine in such a manner as to be able to be interlinked to a magnetic flux generated by the primary coils at the energization of the primary coils; a control device that allows energization of alternate current to the pair of primary coils only when a horizontal distance between the primary coils and the secondary coil falls within a predetermine range; plate-like primary-side magnetic materials each disposed on end faces farther from the secondary coil, of respective two end faces of the primary coils; a secondary-side magnetic material disposed inside the secondary coil; primary-side shielding materials that are each disposed on the end faces farther from the secondary coil, of the respective two end faces of the primary coils, and shields a leakage flux; and a secondary-side shielding material that is mounted to the electric operation machine in such a manner as to be placed between the secondary coil and the electric operation machine, and shields a leakage flux.

According to the present invention, it is possible to readily increase an allowable amount of a positional displacement between primary and secondary coils.

### BRIEF DESCRIPTION OF DRAWINGS

FIG. 1 is an overall configuration diagram of an inductive power supply system according to an embodiment of the present invention;
FIG. 2 is a perspective view of a pair of primary coils and a secondary coil according to a first embodiment of the present invention;
FIG. 3 is a diagram showing an example in which the pair of primary coils according to the first embodiment of the present invention is connected in series;
FIG. 4 is a perspective view taken out from only the pair of primary coils and the secondary coil according to the first embodiment of the present invention;
FIG. 5 is a front view taken out from only the pair of primary coils and the secondary coil according to the first embodiment of the present invention;
FIG. 6 is a side view taken out from only the pair of primary coils and the secondary coil according to the first embodiment of the present invention;
FIG. 7 is a first diagram showing a state in which a positional displacement between the pair of primary coils and the secondary coil occurs in a vehicle cross-machine direction where the pair of primary coil and the secondary coil has no core;
FIG. 8 is a second diagram depicting a state in which a positional displacement between the pair of primary coils and the secondary coil occurs in the vehicle cross-machine direction where the pair of primary coils and the secondary coil has no core;
FIG. 9 is a diagram showing a state in which a positional displacement between the pair of primary coils and the secondary coil occurs in the vehicle cross-machine direction where the pair of primary coils and the secondary coil is each provided with a core;
FIG. 10 is a front view of primary coils and a secondary coil according to a second embodiment of the present invention;
FIG. 11 is a front view of primary coils and a secondary coil according to a third embodiment of the present invention;
FIG. 12 is a perspective view of a mold coil according to a fourth embodiment of the present invention;
FIG. 13 is a sectional view of the mold coil according to the fourth embodiment of the present invention; and
FIG. 14 is a sectional view of mold coils according to a fifth embodiment of the present invention.

### DESCRIPTION OF THE PREFERRED EMBODIMENTS

Preferred embodiments of the present invention will hereinafter be described using the accompanying drawings. Incidentally, the terms "parallel," "orthogonal," and "vertical" described in the present specification do not define strict parallel, orthogonal and vertical relationships but define a substantial relationship that allows for a range of manufacturing tolerance/design tolerance or an error, for example, caused by accumulation of these.

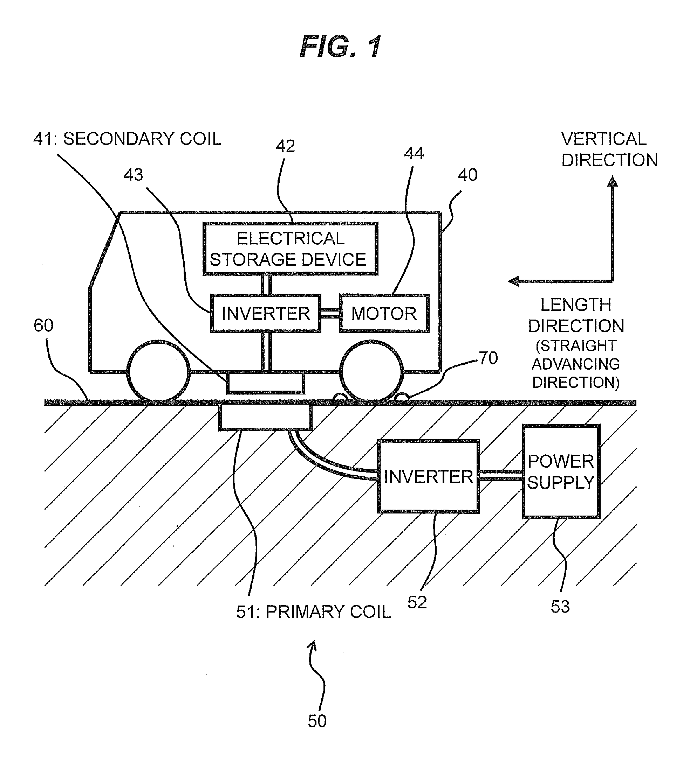

FIG. 1 is an overall configuration diagram of an inductive power supply system according to an embodiment of the present invention. The inductive power supply system shown in this drawing supplies power by radio to an electric operation machine 40 such as an electric vehicle using a mutual action of electromagnetic induction and is equipped with a power feeder 51 installed in a charging facility (charging stand) 50 on the ground side, and a power receiver 41 mounted to the electric operation machine 40. Arrows in a coordinate system shown in FIG. 1 each indicate the length direction (straight advancing direction) of the electric operation machine 40 and its vertical direction. The power feeder 51 and the power receiver 41 may be referred to as an inductive power supply system collectively. A description will be made here of a case where the electric operation machine 40 is of a large electric vehicle. Others may however be adopted if they are equipped with chargeable electrical storage devices, like midsize and small-sized vehicles, construction machines such as a hydraulic excavator and a wheel loader, and an industrial machine such as a forklift.

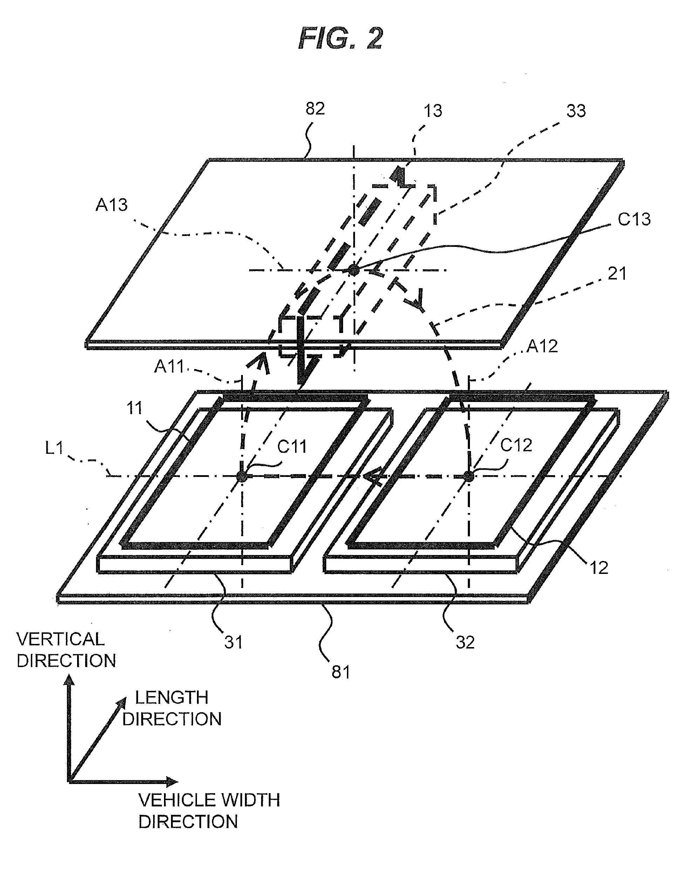

The power feeder 51 is fixed non-movably relative to the ground 60 and connected to a power supply 53 through an inverter (control device) 52. The inverter 52 and the power supply 53 are installed in the charging facility 50. Alternate current power supply, for example, is available as the power supply 53. The primary coils 11 and 12 (refer to FIG. 2, for example) each formed by annularly winding a wire (electric wire) having electric conductivity is stored in the power feeder 51. Magnetic fields are generated around the power supplying coils by a high-frequency electric current supplied from the power supply 53 through the inverter 52. Although the inverter 52 and the power supply 53 both shown in FIG. 1 are buried in the ground, they may be installed on the ground as well.

The power receiver 41 is connected to an electrical storage device 42 through an inverter (control device) 43. The inverter 43 and the electrical storage device 42 are mounted to the electric operation machine 40. As the electrical storage device 42, for example, a secondary battery such as a lithium-ion battery or a capacitor is available. The power receiver 41 is equipped with a secondary coil 13 (refer to FIG. 2, for example) formed by annularly winding a wire (electrical wire) having electrical conduction.

The inverter 52 converts a current supplied from the power supply 53 into a high-frequency alternate current suitable for charging the electric operation machine and supplies the same to the power feeder 51. When the power feeder 51 is supplied with the high-frequency alternate current, the ratio of a change in magnetic flux (i.e., magnetic flux generated by each of the primary coils 11 and 12) passing through the secondary coil 13 can increase, thus raising the voltage of an induced current generated in the secondary coil 13 and thereby enabling power supply at high power (1 kW or higher) suitable for the electric operation machine.

When the electric operation machine 40 is moved to a position (e.g., a position where the power receiver 41 and the power feeder 51 are arranged opposite to each other) suitable for the supply of power from the power feeder 51 to the power receiver 41, and alternate current is supplied to the power feeder 51 by the inverter 52, a magnetic field generated in the power feeder 51 changes so that the current (induced current) flows through the secondary coil 13, whereby the electrical storage device 42 is charged. The power stored in the electrical storage device 42 is supplied to and used in an electric machine such as a motor 44 connected to the inverter 43. A description will be made here of a case where power is supplied from the electrical storage device 42 to the motor 44 for driving each wheel of the electric operation machine 40. A power supply target for the electrical storage device 42 may be taken as other electric machine mounted to the electric operation machine 40.

The power receiver 41 shown in FIG. 1 is disposed on the bottom face of the electric operation machine 40, but may be installed in other places (e.g., the side and upper faces of the electric operation machine 40) if installed to the electric operation machine 40. In such a case, it is needless to say that the place where the power feeder 51 is installed in the charging facility 50 changes in matching with the location of installation of the power receiver 41. The power feeder 51 in FIG. 1 is fixed to the ground 60 in such a manner that the height of its top face is less than or equal to the ground surface.

FIG. 2 is a perspective view of primary coils 11 and 12 and a secondary coil 13 according to a first embodiment of the present invention. Arrows in a coordinate system shown in the drawing each indicate the "length direction" (straight advancing direction) of the electric operation machine 40, the "vehicle cross-machine direction (axial direction)" and the "vertical direction" of the electric operation machine. The same reference numerals are attached to the same parts as those in the previous figure, and their description may therefore be omitted (subsequent drawings likewise).

As shown in FIG. 2, the power feeder 51 is stored with a pair of (i.e., two) primary coils 11 and 12, plate-like cores (primary-side magnetic materials) 31 and 32, and a shielding plate (primary-side shielding material) 81. The power receiver 41 is stored with one secondary coil 13, a bar-like core (secondary-side magnetic material) 33, and a shielding plate (secondary-side shielding material) 82.

In the power feeder 51, the plate-like cores 31 and 32 are made from a ferromagnetic material (e.g., iron, ferrite) and each mounted to the back faces (the end faces farther from the secondary coil 13, of two axially-disposed end faces of the respective primary coils 11 and 12) of the primary coils 11 and 12. It is preferred that in terms of a reduction in power loss, the length of each of the plate-like cores 31 and 32 in its longitudinal direction is taken to be the lengthwise inner dimension of each of the primary coils 11 and 12, and the length of each of the cores 31 and 32 in the vehicle cross-machine direction is taken to be the inner dimension of each of the primary coils 11 and 12 in the vehicle cross-machine direction. Although the two cores 31 and 32 are disposed with a space apart in the example of FIG. 2, the interval between the two cores 31 and 32 is preferably reduced for efficiency by the extension of the length in the vehicle cross-machine direction, for example, and a power loss can thus be reduced. For example, the two plate-like cores 31 and 32 are coupled to each other to be formed as one plate material, and it may be disposed on the lower surfaces of the pair of primary coils 11 and 12. Further, three or more plate-like cores may be combined together to form one plate material (plate-like core).

The shielding plate (primary-side shielding material) 81 is used for shielding a leakage flux to the outside of the power feeder 51 during energization. The shielding plate 81 is made from a nonmagnetic material (e.g., aluminum, copper) and mounted to the bottom faces (the faces farther from the secondary coil 13) of the plate-like cores 31 and 32. The illustrated shielding plate 81 is plate-like, but may be provided with wall faces rising from its ends to surround the primary coils 11 and 12 from their outer peripheries. A curved surface such as the form of a bowl may be utilized for the shielding plate 81. The shielding plate 81 does not need to be stored in the power feeder 51 and may be disposed on the bottom face of the power feeder 51 in the illustrated arrangement. Further, one shielding plate 81 is shared between the pair of primary coils 11 and 12 in the illustrated example, but one shielding plate may be disposed for each of the primary coils 11 and 12.

In the power receiver 41, the bar-like core 33 is made from a ferromagnetic material (e.g., iron, ferrite) and disposed inside the ring of the secondary coil 13.

The shielding plate (secondary-side shielding material) 82 is used for shielding a leakage flux to the outside of the power receiver 41 during energization. The shielding plate 82 is made from a nonmagnetic material (e.g., aluminum, copper) and mounted above the secondary coil 13 (the farther from the primary coils 11 and 12). As with the shielding plate 81, the shielding plate 82 may also be provided with wall faces rising from its ends to surround the secondary coil 13 from its outer periphery. A curved surface may be utilized in like manner. The shielding plate 82 does not need to be stored within the power receiver 41 and may be disposed on the upper face of the power receiver 41 in the illustrated arrangement. That is, the power receiver 41 may be mounted to the bottom face of the electric operation machine 40 with the shielding plate 82 in-between.

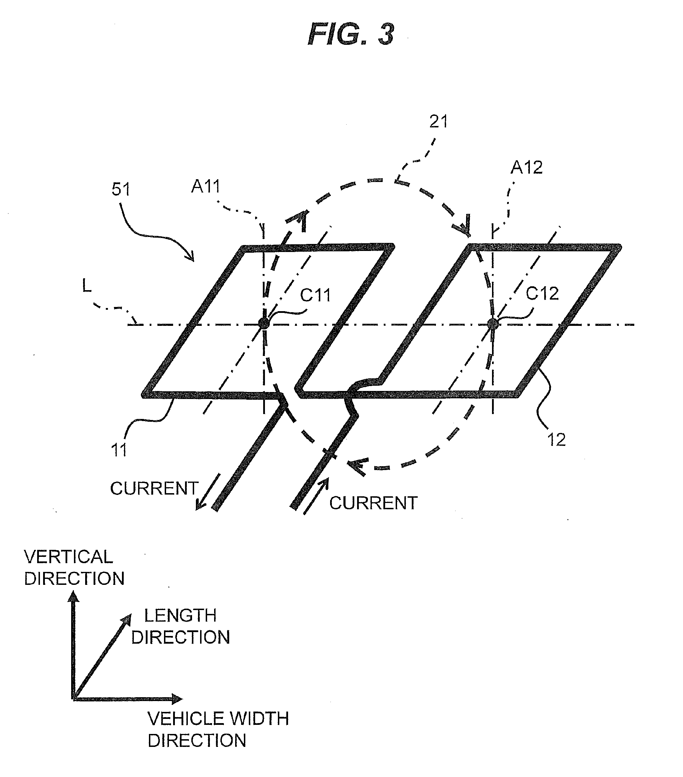

Although not shown in FIG. 2, the two primary coils 11 and 12 in the power feeder 51 are connected in series circuit (series-connected) to each other (although not shown in other drawings either, the two primary coils 11 and 12 are hereinafter assumed to be series-connected). A description will now be made of a concrete example in which the pair of primary coils 11 and 12 is connected in series circuit using FIG. 3.

FIG. 3 is a diagram showing an example in which the pair of primary coils 11 and 12 is connected in series circuit. In the example shown in this drawing, the respective coils 11 and 12 are wound by one turn and formed of only a single electric wire. The two coils 11 and 12 are wound in such a manner that a magnetic dipole including an annular magnetic flux that passes through the inside of all the rings formed by the two coils 11 and 12 but does not pass through the outside of each ring is generated when the two coils 11 and 12 are energized. Looking at the two primary coils 11 and 12 from top to bottom in the vertical direction in the example of FIG. 3, the two primary coils 11 and 12 are made opposite to each other in their winding directions (the electric wire for the primary coil 11 is wound in a counterclockwise direction and the electric wire for the primary coil 12 is wound in a clockwise direction). When a current is allowed to flow in the direction indicated by arrow in FIG. 3 (i.e., when a counterclockwise current is allowed to flow in the coil 11, and a clockwise current is allowed to flow in the coil 12), a magnetic dipole having a circular (elliptical) closed curve 21 indicated by a dotted line in FIG. 3 as a magnetic force line is generated. Since the two primary coils 11 and 12 are connected in series circuit, in-phase alternate currents always flow, and hence the magnetic dipole having the circular magnetic force line 21 shown in the drawing can easily be generated.

Although there are shown in FIG. 3 the magnetic field where the cores 31 and 32 are omitted to represent the magnetic dipole generated by the two primary coils 11 and 12 in a way easy to understand, the cores 31 and 32 exist in the example of FIG. 2. Therefore, in the example of FIG. 2, a magnetic field of such a form (hereinafter may be referred to as "semi-annular") that an annular shape having a circular magnetic force line 21 shown in each of FIGS. 3 through 6 in the central axis is cut to half by the plate-like cores 31 and 32 is formed. That is, a magnetic dipole having a magnetic force line 21 shown in FIG. 2 is formed.

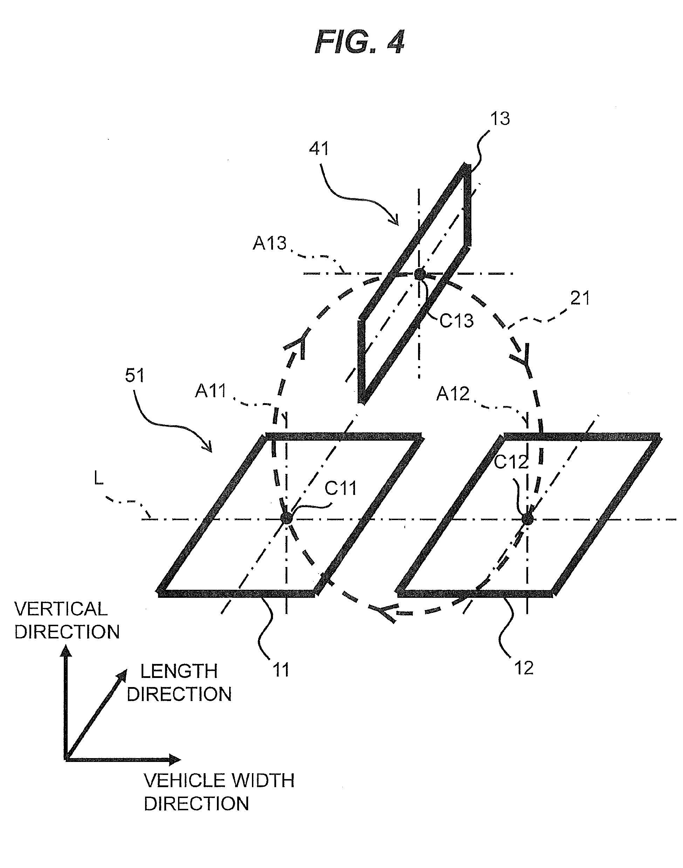

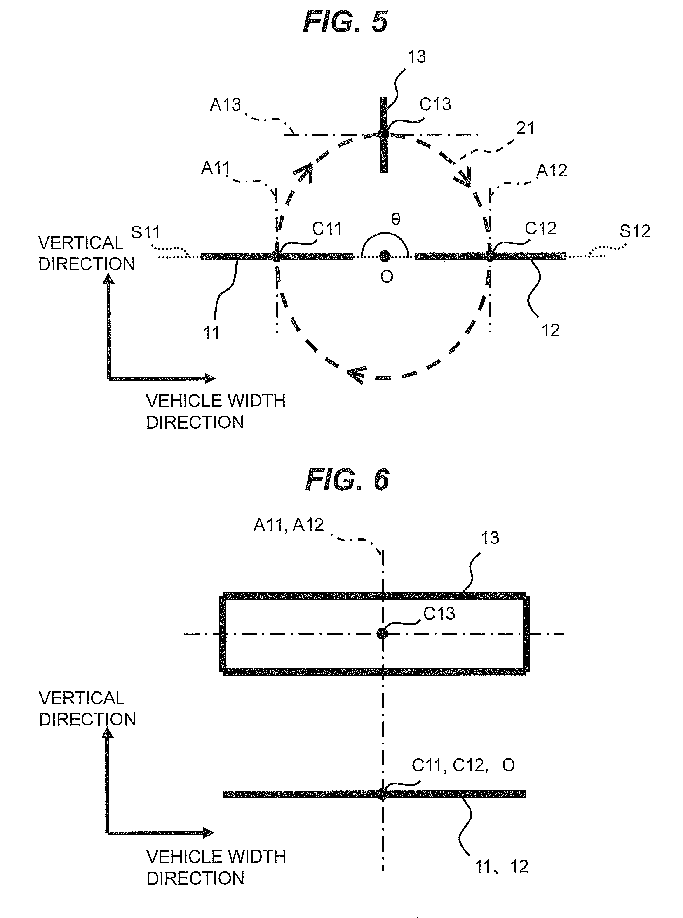

The two primary coils 11 and 12 and the secondary coil 13 will further be explained using other drawings. FIG. 4 is a perspective view showing in extracted form, only the pair of primary coils 11 and 12 and the secondary coil 13 according to the first embodiment of the present invention, FIG. 5 is a front view thereof, and FIG. 6 is a side view thereof.

Each of the coils 11, 12 and 13 is formed into a flat shape by winding an electric wire by plural times in an approximately rectangular form. The electric wires or whole of the coils 11, 12 and 13 may preferably be covered with an insulator. In the example shown in the drawings, the two primary coils 11 and 12 are identical in shape to each other. On the other hand, the secondary coil 13 is identical to the primary coil 11 (12) in its long-side direction and set to half of the primary coil 11 (12) in its short-side direction. The shape of the coils 11, 12 and 13 is, however, merely an example. That is, each of the coils 11, 12 and 13 according to the present embodiment is shaped into a rectangle (rectangular shape) of which the size in its length direction is longer than the side in the vehicle cross-machine direction, but it may be formed to a rectangular, square, circular or elliptical shape, for example, in which the length of each side has been reversed. Likewise, the coils 11, 12 and 13 may be made different in shape. As a material for the electric wire related to each of the coils 11, 12 and 13, a litz wire, for example, is suitable to reduce an eddy current loss caused by a skin effect. Depending on a current density limitation, a plurality of electric wires is arranged in parallel and may be connected in series circuit at the primary coils 11 and 12.

Of an angle (dihedral angle) formed by two surfaces S11 and S12 perpendicular to the central axes A11 and A12 of the two primary coils 11 and 12, the angle (hereinafter called θ) on the arranged side of secondary coil 13 is 180°. In the example shown in FIGS. 2 through 6, the two primary coils 11 and 12 are located on a plane defined by the vehicle width and length directions and disposed at a predetermined interval as in the vehicle cross-machine direction. Thus, the central axes A11 and A12 related to the two primary coils are both held substantially vertically. When the primary coils 11 and 12 are placed parallel on the horizontal plane in this manner, the power feeder 51 does not interfere with the flow of people or a mobile body, for example. The angle θ which the two primary coils 11 and 12 form with each other is not limited to only 180° shown in the drawing because it is sufficient if the secondary coil 13 can be disposed between the two coils 11 and 12 while forming the magnetic dipole by the two coils 11 and 12 (the details thereof will be described later).

Each of the primary coils 11 and 12 is disposed in such a manner that the short side thereof extends along the "vehicle cross-machine direction" while the long side thereof extends along the "length direction." The interval between the two primary coils 11 and 12 in the vehicle cross-machine direction, i.e., a center-to-center distance (distance from a center point C11 to a center point C12) between both coils 11 and 12 is set larger than a value obtained by adding together values obtained by reducing the length in the vehicle cross-machine direction of the coils 11 and 12 to half and is set in such a manner that the two coils 11 and 12 do not overlap each other. The "center point of each coil" shown below means a middle point related to a part included in the coil within the central axis of the coil.

The range of stop of the electric operation machine 40 in which the power can be supplied from the power feeder 51 to the power receiver 41 is limited to a range in which the magnetic flux of the magnetic dipole generated by the pair of primary coils 11 and 12 can be interlinked to the secondary coil 13. Since it is likely that when a positional displacement between the power feeder 51 and the power receiver 41 is large, leakage flux to the periphery will increase, the stop range of the electric operation machine 40 is preferably set in advance in terms of the suppression of leakage flux.

Thus, in the present embodiment, a concave portion 70 (refer to FIG. 1) is provided on the road surface as means (charging position instruction means) for indicating the position of stop of the chargeable electric operation machine 40. The concave portion 70 is formed to the size in which each of the rear wheels of the electric operation machine 40 can be stored. In the example of FIG. 1, the concave portion 70 is provided at the front and back with convex portions easy for the electric operation machine 40 to ride over. If the stop position instruction means is provided in this manner, and the electric operation machine 40 stops in a state in which the left and right rear wheels related to the electric operation machine 40 are stored in the concave portion 70, the electric operation machine 40 can stop at a position suitable for charging at least with respect to the length direction of the electric operation machine 40. That is, the positional relationship between the primary coils 11 and 12 and the power receiving side 13 shown in FIG. 6 can be ensured in the concave portion 70.

A concave portion in which the front wheels of the electric operation machine 40 are stored at a chargeable position may be utilized instead of the concave portion 70 as the charging position instruction means. As other charging position instruction means, general car stoppers indicative of stop positions in contact with the rear wheels of the electric operation machine 40 may be used too, as well as indication of a charging position to a driver by paint (e.g., stop line) applied on a road surface, for example. That is, as long as the means is capable of indicating the charging position, there is no limitation to its form in particular.

Further, the inverter 52 according to the present embodiment is configured in such a manner as to detect the relative directions (orientations) of the power receiver 41 to the power feeder 51 and the horizontal distance thereof to the power feeder 51 by means of a known detector (e.g., an accelerometer, a gyro sensor, or a magnetometric sensor) and allow alternate current to flow to the primary coils 11 and 12 only where the direction of the two and the horizontal distance therebetween fall within a predetermined range. This configuration will enable a reduction in the leakage flux, the orientation (direction) of the power receiver 41 relative to the power feeder 51 and the horizontal distance thereof to the power feeder 51 may be notified to the driver of the electric operation machine 40 and taken as a guide for the stop position.

The secondary coil 13 will now be described. The secondary coil 13 is disposed in such a manner as to be able to be interlinked to the magnetic flux 21 generated by the primary coils 11 and 12 upon energization of the primary coils 11 and 12 (i.e., at the charging to the electrical storage device 42). A center point C13 of the secondary coil 13 is not placed on a straight line L passing through the center points C11 and C12 of the two primary coils 11 and 12, but is located around the straight line L.

When the electric operation machine 40 is moved to place a central axis A13 of the secondary coil 13 on the same plane as the straight line L, the central axis A13 is fixed to the electric operation machine 40 (power receiver 41) in such a manner as to be parallel with the straight line L. The state shown in each of FIGS. 2 through 6 indicates a state in which the electric operation machine 40 stops at the position most suitable for the charging of the electrical storage device 42. That is, there is shown a state (position displacement-free state related to the length direction of the electric operation machine 40) in which the left and right wheels of the electric operation machine 40 are stored in the concave portion 70. The center point C13 of the secondary coil 13 is located at a position separated by an equal distance from each of the center points C11 and C12 of the two primary coils 11 and 12 as seen in the vehicle cross-machine direction. Further, the central axis A13 is located vertically over the straight line L.

The direction of the central axis A13 of the secondary coil 13 at the energization of the two primary coils 11 and 12 is different from the directions of the two central axes A11 and A12 related to the two primary coils 11 and 12. That is, in the present embodiment, as shown in FIG. 5, the direction of the central axis A13 of the secondary coil 13 is set to the vehicle cross-machine direction, whereas the directions of the central axes A11 and A12 of the primary coils 11 and 12 are set to the vertical direction. In the present embodiment, the direction of the central axis A13 of the secondary coil 13 is different from the directions of the central axes A11 and A12 of the two primary coils 11 and 12, respectively, but may be different from the central axis A11 or A12 of at least either of the two primary coils 11 and 12 (that is, the direction of the central axis A13 in this case coincides with either of the central axes A11 and A12 of the two primary coils 11 and 12).

Meanwhile, the secondary coil 13 according to the present embodiment is fixed to the bottom face of the electric operation machine 40 in such a manner that its central axis A13 is kept parallel with the vehicle cross-machine direction. This is mainly based on a viewpoint that the direction of the central axis A13 is made coincident with the arrangement direction (vehicle cross-machine direction) of the two primary coils 11 and 12 (or both directions are made as close to each other as possible) to increase an allowable amount related to the positional displacement between the power feeder 51 and the power receiver 41 and a viewpoint that the magnetic flux interlinked to the receiving-side coil 13 is increased to improve the charging efficiency.

The distance (the installation height of the secondary coil 13 from the ground in FIGS. 2 through 6) from the straight line L passing through the center points C11 and C12 of the two primary coils 11 and 12 to the center point C13 of the secondary coil 13 is preferably adjusted according to the amount of power supplied from the power supply 53 to the primary coils 11 and 12 and the characteristics of the magnetic field formed by the primary coils 11 and 12. For example, in the present embodiment, a main magnetic field is formed on the circumference of a circle with the distance from a point O in FIG. 5 to the center point C11 of one primary coil 11 as a radius and the center of the circle as O. The central axis A13 is held at a height as large as the radius of the circle. Thus, if the secondary coil 13 is disposed as shown in FIGS. 2 through 6 with respect to the two primary coils 11 and 12, the magnetic force line 21 of the magnetic field generated by the primary coils 11 and 12 is interlinked substantially vertically to the center point C13 of the receiving-side coil 13.

In the inductive power supply system configured in the above-described manner, in order to supply power from the power feeder 51 to the power receiver 41 by radio (i.e., charge the electrical storage device 42), the driver first stops the electric operation machine 40 to the position suitable for its charging on the basis of the charging position instruction means (concave portion 70).

First, when the electric operation machine 40 stops in such a manner that the center point C13 of the secondary coil 13 is placed above the midpoint 0 between the primary coils 11 and 12 or in the neighborhood thereof, the positional relationship between the primary coils 11 and 12 and the secondary coil 13 will be as shown in FIGS. 4 through 6.

After confirmation that the electric operation machine 40 stops, and then the power receiver 41 is stored within a prescribed range with respect to the power feeder 51, the inverter 52 carries a high-frequency alternate current to the two primary coils 11 and 12 and starts supplying power from the power feeder 51 to the power receiver 41. Since the two primary coils 11 and 12 are connected in series circuit and in-phase alternate currents always flow therethrough, such a substantially semi-annular magnetic dipole as shown in FIG. 2 is generated in space above the primary coils 11 and 12 even though the phases of the currents of the primary coils 11 and 12 are not adjusted in particular. At this time, since the secondary coil 13 is disposed in such a manner as to be interlinked to the magnetic flux of the magnetic dipole formed by the two primary coils 11 and 12, an induced current is generated in the secondary coil 13, thereby charging the electrical storage device 42.

In the example of FIG. 2, since the cores 31 and 32 made from the ferromagnetic material are disposed on the bottom faces of the primary coils 11 and 12, the magnetic force lines generated by the primary coils 11 and 12 mainly pass through the inside of the cores 31 and 32 beneath the primary coils 11 and 12, respectively. Thus, the generation of the magnetic field is limited to the power receiver 41 side, and the leakage flux in other directions (downward of the cores 31 and 32, for example) can be suppressed.

In the present embodiment, since the central axis A13 of the secondary coil 13 is fixed to be parallel with the straight line L (the direction of arrangement of the two primary coils 11 and 12) when it is placed on the same plane surface as the straight line L, the central axis A13 is located vertically over the straight line L in the state of FIG. 2. Accordingly, the charging efficiency is prominently higher as compared with other cases.

Although the electric operation machine 40 can stop at the charging position with the concave portion 70 as the guide in the length direction position of the electric operation machine 40, the magnitude of the degree of the positional displacement between the power feeder 51 and the power receiver 41 as seen in the vehicle cross-machine direction differs depending on the driver's driving skills, experience, etc. As a result, unlike the above case, when the electric operation machine 40 fails to stop in such a manner that the center point C13 of the secondary coil 13 is placed above the point 0 or in the neighborhood thereof, the positional displacement between the power feeder 51 and the power receiver 41 occurs in the vehicle cross-machine direction.

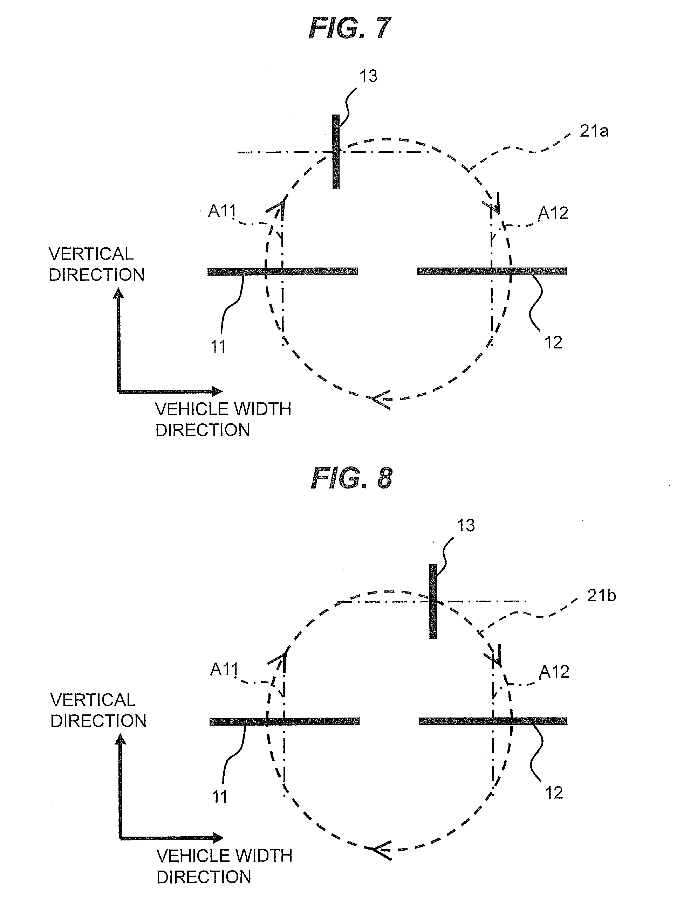

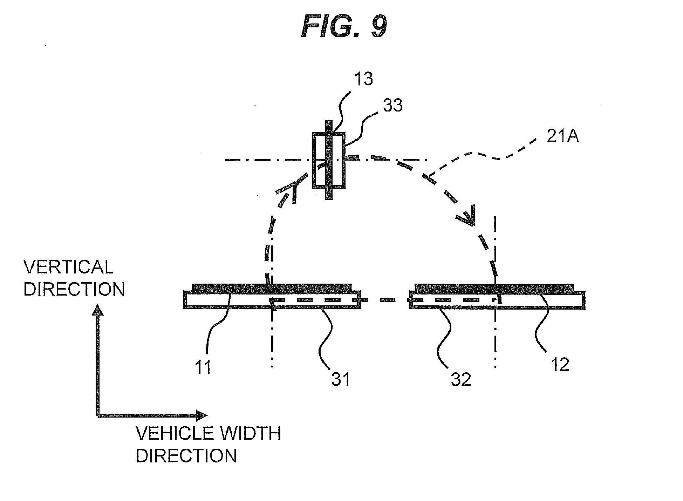

FIGS. 7 and 8 are diagrams each showing a state in which a positional displacement between the primary coils 11 and 12 and the secondary coil 13 occurs in the vehicle cross-machine direction where the primary coils 11 and 12 and the secondary coil 13 have no core (the cases in FIGS. 4, 5, and 6). In FIG. 7 the secondary coil 13 is shifted to the left side in the drawing, whereas in FIG. 8 it is shifted to the right side in the drawing. On the other hand, FIG. 9 is a diagram showing a state in which a positional displacement between the primary coils 11 and 12 and the secondary coil 13 occurs in the vehicle cross-machine direction where the primary coils 11 and 12 and the secondary coil 13 are each provided with cores 31, 32, and 33, respectively (the case of FIG. 2).

When the positional displacement between the primary coils 11 and 12 and the secondary coil 13 occurs even when no core exist in the primary coils 11 and 12 and the secondary coil 13 as shown in FIGS. 7 and 8, a magnetic dipole 21 expanded substantially semi-annularly can be generated in a space located between the power feeder 51 and the power receiver 41 by the two primary coils 11 and 12. Therefore, even if the position of the secondary coil 13 is displaced in the vehicle cross-machine direction (the direction of arrangement of two primary coils 11 and 12) from the optimum charging position shown in FIG. 4, magnetic fluxes 21a and 21b effective for the generation of the induced current at the secondary coil 13 exist. Thus, even if the positional displacement occurs in the vehicle cross-machine direction, the charging efficiency is relatively reduced as compared with the cases shown in FIGS. 4 through 6, but the charging can be performed without any problem. A guide of an allowable amount of the positional displacement in the vehicle cross-machine direction from the point 0 in FIG. 5 is up to about half of the center-to-center distance between the primary coils 11 and 12. That is, even if the position is approximately the allowable amount away from the point 0, it still is possible to interlink the magnetic flux generated by the primary coils 11 and 12 with the secondary coil 13 to each other, thereby charging the electrical storage device 42.

In the cases described using FIGS. 7 and 8, there is no change in the magnetic field itself generated by the primary coils 11 and 12 in association with the positional displacement of the secondary coil 13. However, when the core 33 exists in the secondary coil 13 as shown in FIG. 2, the magnetic field changes in association with the core 33. When the position of the secondary coil 13 is shifted as shown in FIG. 9, a magnetic field 21A changes in association with the position of the secondary coil 13 (core 33) and hence is asymmetric. Thus, when the secondary coil 13 is the core coil, the magnetic flux that is interlinked to the coil can be increased more than when it is the air-core coil (in the cases shown in FIGS. 7 and 8), thus enabling an improvement in the charging efficiency. Since the interlinkage flux increases, it is also possible to achieve miniaturization of the primary coils 11 and 12. Further, when the plate-like cores 31 and 32 are provided on the back faces of the primary coils 11 and 12 as shown in FIG. 2, the generation of the magnetic field that leaks to the outside can be suppressed as shown in FIG. 9, thus further improving the charging efficiency.

The annular magnetic fluxes (magnetic force lines) 21a and 21b shown in FIGS. 7 and 8 merely indicate the magnetic fluxes 21a and 21b effective for the generation of the induced current in the position-displaced secondary coil 13, of the magnetic flux 21 (refer to FIG. 3, for example) related to the magnetic field formed by the primary coils 11 and 12. No change occurs in the magnetic field formed by the primary coils 11 and 12. That is, even in the cases of FIGS. 7 and 8, the primary coils 11 and 12 generate the annular magnetic field shown in FIG. 3, for example.

Advantages of the present embodiment will now be summarized. In the present embodiment as described above, the pair of primary coils 11 and 12 is disposed with interval in-between in the vehicle cross-machine direction. The high-frequency current flows to the pair of primary coils 11 and 12 to generate the substantially semi-annular magnetic dipole expanded in the vehicle cross-machine direction (refer to FIG. 2). When the thus-generated magnetic dipole occurs, the secondary coil 13 can be interlinked to the magnetic flux generated by the magnetic field of the primary coils 11 and 12 even if the center point C13 of the secondary coil 13 is shifted in the vehicle cross-machine direction from the center {midpoint 0 between the center points C11 and C12 (refer to FIG. 5)} between the two primary coils 11 and 12. It is therefore possible to increase the allowable amount of the positional displacement between the power feeder 51 and the power receiver 41 in the vehicle cross-machine direction.

Generating the magnetic dipole with the use of the pair of primary coils 11 and 12 allows the magnetic field that leaks to the outer peripheries of the primary coils 11 and 12 to be noticeably suppressed compared with the related art (JP-2011-49230-A) in which the power is supplied in the state in which the central axes of the primary and secondary coils are made parallel, and the related art (e.g., JP-2008-87733-A) in which the power is supplied in the state in which the primary and secondary coils are coaxially arranged. This makes it possible to easily suppress the influence of the magnetic field exerted on the outside even where high power is used.

There is shown the technology which is applied to the inductive power supply system for the small-sized portable electronic device such as the cellular phone including a plurality of primary coils parallel-coupled (connected in parallel) to a power supply and which adjusts the phase of an electric current allowed to pass through each primary coil by switching, for example, to thereby generate a magnetic field (including a magnetic dipole) around the primary coils and interlinks a secondary coil with the magnetic flux related to the magnetic field to thereby generate an induced current in the secondary coil (International Patent Publication No. 2009/027674, pamphlet). However, unlike a device only requiring low power to operate as in a portable electronic device, a high power of 1 kW or more is required for the charging of an electric operation machine, and a high-frequency current is required to flow through each primary coil. It was therefore hard to match the phase of the high-frequency current between the respective primary coils connected in parallel and difficult to use the inductive power supply system for the portable electronic device for the charging of the electric operation machine.

In contrast to this, the inductive power supply system according to the present embodiment is equipped with the pair of primary coils 11 and 12 connected in series circuit and allows the high-frequency alternate current to flow through the pair of primary coils 11 and 12. Thus, when the pair of primary coils 11 and 12 is connected in series circuit, the in-phase currents always flow through the primary coils 11 and 12. Therefore, such a substantially semi-annular magnetic dipole as shown in FIG. 2 can be generated in the space above the primary coils 11 and 12 without a particular adjustment, for example, to the phase of the current of each of the primary coils 11 and 12. Accordingly, if the secondary coil 13 is interlinked to the magnetic flux of the magnetic dipole, it is possible to easily charge the electric operation machine requiring high power.

Thus, according to the present embodiment as described above, the inductive power supply system for the electric operation machine is capable of easily increasing the allowable amount of the positional displacement between the primary coils (power feeder) and the secondary coil (power receiver) and further easily suppressing the magnetic field leakage at the energization.

Now assuming that the central axes A11 and A12 of the two primary coils 11 and 12 coincide with each other, and the angle θ the two coils 11 and 12 form is 0 (i.e., the surfaces S11 and S12 are parallel), effective charging cannot be done if the secondary coil 13 is not placed within the space sandwiched between the two primary coils 11 and 12. Therefore, there occurs a limitation to the arrangement of the secondary coil 13 with respect to the two primary coils 11 and 12. For example, when the coils 11 and 12 are disposed upright in the vertical direction in such a manner that the surfaces S11 and S12 are parallel, the power feeder 51 is likely to project to the ground surface and be an obstacle. That is, this is good as a power feeding device for a mobile body such as an electric train that performs only linear movements, but may be unsuitable for a power feeding device for a mobile body (e.g., a car) capable of even surface movements due to an excessive increase in installation limitation.

On the other hand, when the two primary coils 11 and 12 are disposed as in the present embodiment, the curved magnetic field is formed as part of the annular magnetic field between the two coils 11 and 12. It is therefore possible to generate the magnetic flux even in a place surface relatively away from the two primary coils 11 and 12 as compared with the case where θ is 0 {two coils 11 and 12 (two surfaces S11 and S12) are parallel}, thus enabling effective charging even if the secondary coil 13 is placed in the position away from the primary coils 11 and 12.

Since the secondary coil 13 according to the present embodiment is held in such a manner that the central axis A13 is approximately parallel with the vehicle cross-machine direction, and the size of the secondary coil 13 occupied in the vehicle cross-machine direction (dimension along the direction in which the positional displacement is allowed) may be small, it is possible to reduce the dimension of the power receiver 41 in the vehicle with direction. Thus, since the area of each of the shielding plates 81 and 82 can be made small, it is also possible to readily suppress the leakage of the magnetic field to the mobile body 40.

Although each embodiment described above has explained where the angle θ the two primary coils 11 and 12 is 180°, the angle θ may be angles other than 180° if the annular magnetic field 21 can be formed by the two primary coils 11 and 12. Although a difference in intensity occurs, it is possible to form an annular magnetic field theoretically if the angle θ is larger than 0 and less than 360°.

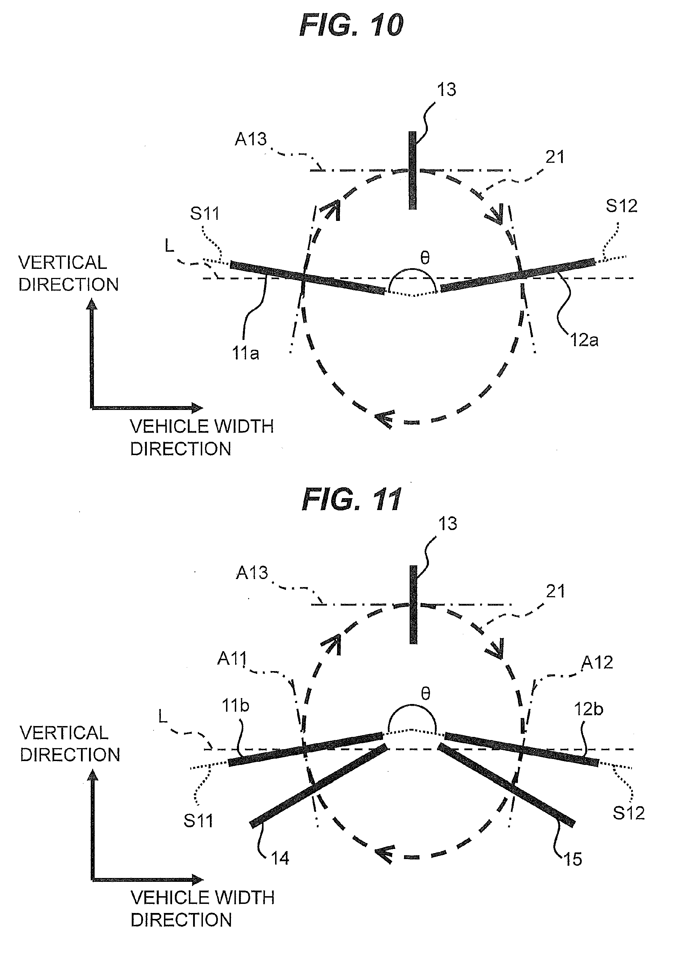

FIG. 10 is a front view of primary coils 11a and 12a and a secondary coil 13 according to a second embodiment of the present invention. An inductive power supply system shown in this drawing is equipped with the two primary coils 11a and 12a. An angle θ the two primary coils 11a and 12a form is set to 160° which is a value larger than 0 and less than 180°. Since an annular magnetic field 21 can be generated even in the case where the primary coils 11a and 12a are arranged in like manner, advantages similar to those in the above respective embodiments can be brought about. In the present embodiment in particular, the primary coils 11a and 12a can be made closer to the secondary coil 13 than in the first embodiment, thereby making it possible to improve charging efficiency.

Although each of the embodiments has described where the power feeder 51 having the two primary coils 11 and 12 (11a and 12a) is provided, the number of the primary coils 11 and 12 provided in the power feeder 51 may be set to greater than or equal to 3 if an "annular magnetic field" that can be drawn by lines of magnetic force passing through all the inner portions of the ring related to the plural primary coils related to the power feeder 51 can be formed.

FIG. 11 is a front view of primary coils 11b, 12b, 14, and 15 and a secondary coil 13 according to a third embodiment of the present invention. An inductive power supply system shown in this drawing is equipped with the four primary coils 11b, 12b, 14, and 15.

Of the four primary coils 11b, 12b, 14, and 15, the two primary coils 11b and 12b placed adjacent to the secondary coil 13 at the charging affect the generation of a magnetic flux allowed to be interlinked to the secondary coil 13. Thus, an angle θ the primary coils form where three or more primary coils exist as in the present embodiment is set on the basis of the two primary coils 11b and 12b adjacent to the secondary coil 13. In the case of FIG. 11, the angle θ the two primary coils 11b and 12b form is set to 200° that is a value larger than 180° and less than 360°. An annular magnetic field 21 can be generated even when the primary coils 11b and 12b are disposed in this manner.

The primary coil 14 is placed on the annular magnetic field 21 generated by the two primary coils 11b and 12b and installed below the primary coil 11b adjacent to the primary coil 11b. The primary coil 15 is placed on the annular magnetic field 21 generated by the two primary coils 11b and 12b and installed below the primary coil 12b adjacent to the primary coil 12b. When the coils 14 and 15 located relatively below in this manner are made close to the coils 11b and 12b located relatively above, a reduction in the interlinkage magnetic flux of the secondary coil 13 can be suppressed even when the angle θ the two coils 11b and 12b form is larger than in the first embodiment, for example.

Thus, even by the present embodiment configured as described above, the annular magnetic field can be formed by the primary coils 11b, 12b, 14, and 15, and an allowable amount of a positional displacement between a power feeder 51 and a power receiver 41 can easily be increased.

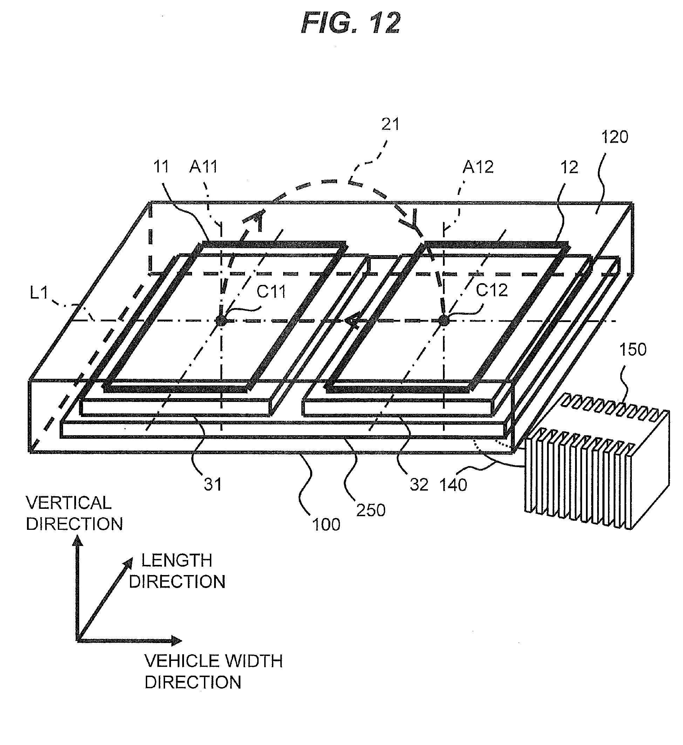

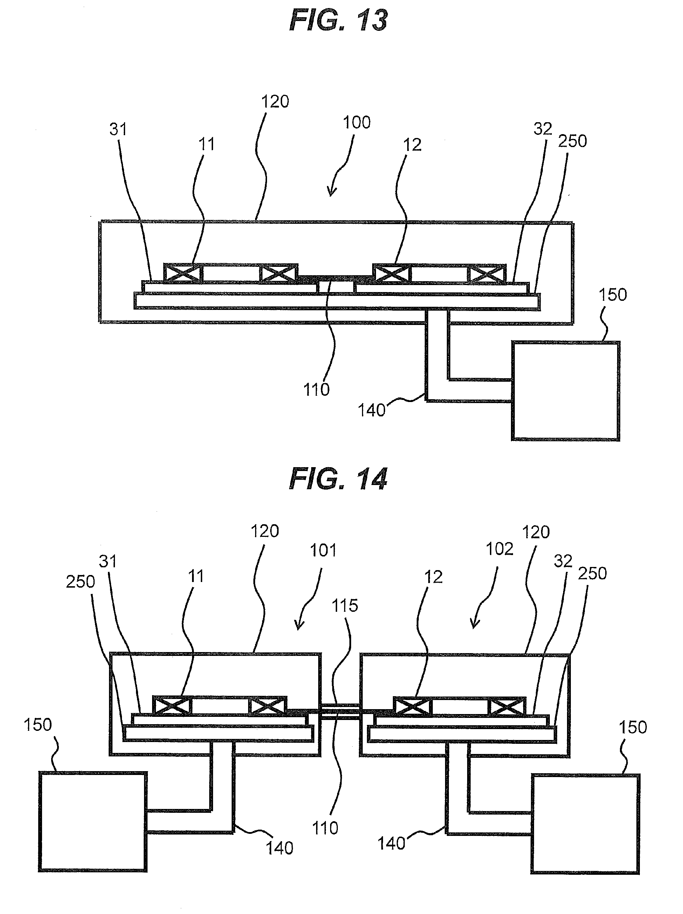

A fourth embodiment of the present invention will now be explained. FIG. 12 is a perspective view of a mold coil 100 according to the fourth embodiment of the present invention, and FIG. 13 is a sectional view thereof.

The mold coil 100 shown in FIGS. 12 and 13 is molded in a substantially rectangular parallelepiped by a resin 120 excellent in weather resistance and provided in a power feeder 51. The mold coil 100 is equipped with primary coils 11 and 12 and cores 31 and 32 buried in the resin 120, a first thermal conductor 250 buried in the resin 120 with the primary coils 11 and 12 and the cores 31 and 32, a second thermal conductor 140 exposed to the outside from within the resin 120, and a radiator 150 connected to the outer end of the second thermal conductor 140. The pair of primary coils 11 and 12 is subjected to a series circuit connection 110 (refer to FIG. 13) as with one shown in FIG. 3.

As the resin 120 used in the mold coil 100, e.g., an unsaturated polyester resin, an epoxy resin, a fluororesin, an ABS resin, an acrylic resin, polyethylene, and polypropylene are exemplified. The mold coil is formed of other materials, of which the surface may be coated with a coating material excellent in weatherability, such as a fluorine-based coating, acryl, and acrylic urethane. These coating materials may be coated with the resin with excellent weatherability as well.

The first thermal conductor 250 is a thermally and electrically improved conductor and is formed into a plate form. In the example shown in the drawing, the first thermal conductor 250 is made to contact with the lower surfaces of the cores 31 and 32, based on the viewpoint of promoting a heat emission effect, but may be fixed apart from the cores 31 and 32. A conductor higher in thermal conductivity than the resin 120 is used as the first thermal conductor 250. For example, a metal such as copper and aluminum is preferably used. Further, the first thermal conductor 250 is preferably a nonmagnetic material from the viewpoint of suppressing the generation of an eddy current caused by an induced current and is especially suitably aluminum from the corresponding viewpoint.

The second thermal conductor 140 is a thermally and electrically improved conductor, is made to contact with the first thermal conductor 250 inside the resin 120, and is exposed to the outside of the resin 120. The second thermal conductor 140 in the present embodiment is a linear conductor and has one end coupled to the bottom face of the first thermal conductor 250 inside the resin 120 and the other end connected to the radiator 150 outside the resin 120. As the second thermal conductor 140, a conductor higher in thermal conductivity than the resin 120 is used and is preferably a metal, for example. In the nature of its use, thermal conductivity is more important than electric conductivity. Further, since the second thermal conductor 140 is assumed to be used under a harsh environment from the relationship in which the other end of the second thermal conductor 140 is exposed to the outside, a metal excellent in weatherability such as stainless steel is preferably used.

The radiator 150 is used for promoting the emission of heat transferred from the cores 31 and 32 and the first thermal conductor 250 through the second thermal conductor 140. The radiator 150 shown in the drawing is provided with a plurality of fins arranged at predetermined intervals in the right and left side faces of its rectangular parallelepiped to increase its surface area and thereby achieve an improvement in heat radiation effect. The material for the radiator 150 is preferably high in thermal conductivity and excellent in weatherability, e.g., the radiator 150 may be formed of an aluminum alloy excellent in corrosion resistance. The radiator 150 may be fixed in the atmosphere or buried in the ground, for example. The latter is more improved in heat radiation effect than the former.

The radiator 150 is not limited to the illustrated shape, but may be other shapes as long as appropriate for heat radiation. The radiator 150 may be configured as a cooling-type cooling device by formation of a cooling water flow path inside the radiator 150, for example. Further, although the present embodiment has explained the example in which the radiator 150 has been attached to the second thermal conductor 140, the radiator 150 may be omitted because a certain degree of heat radiation function is ensured as long as the second thermal conductor 140 is exposed to the outside.

The power feeder (primary coils) for the inductive power supply system is assumed to be set up outdoors and used under a harsh environment exposed to changes in temperature and moisture, dust, wind, rain etc. It is therefore preferable that the primary coils each made from a metal (electric wire) be mold-shaped with a material such as a resin excellent in weatherability and cut off from contact with the outside world. When each coil molded with the resin is energized with alternate current, the temperature thereof rises. The so-heated coils are cooled to a certain degree by the diffusion of heat to the outside through the molded resin.

The generation of heat of the coils increases in proportion to the energization time (i.e., charging time) of the alternate current or the frequency thereof. There is a fear that since the resin is lower in thermal conductivity than the metal, the cooling of the coils is insufficient depending on the energization time or frequency. Further, there is a possibility that the heated resin for the coils might be damaged. As a means of avoiding such a situation, there is considered that the time for the energization to the coils is placed under restriction, for example. It is, however, not desirable that a restriction is set to the charging time for a power feeding device of a charging facility based on the premise that a plurality of electric mobile bodies is continuously charged. A system in which a plurality of power feeders is alternately used is also considered to be constructed, but is undesirable in the viewpoint of an increase in the initial cost of the charging facility. The problem arising in the charging facility has been assumed here, but it is needless to say that a similar problem will arise in the case of a system in which the power from the power feeder to the power receiver is continuously fed.

With the foregoing in view, the present inventors have led to the mold coil 100 shown in FIGS. 12 and 13. According to the power feeder 51 equipped with the mold coil 100 configured in the above-described manner, the heat generated in the primary coils 11 and 12 can be emitted from the cores 31 and 32 and the first thermal conductor 250 to the outside of the mold coil 100 through the secondary conductor 140. Thus, since the application of heat to the resin 120 is suppressed, the continuous energization, i.e., the continuous supply of power to the power receiver 41 can be performed. Since the first thermal conductor 250 contributes to an improvement in the stiffness of the mold coil 100 and is the reference of the mounting position of each of the primary coils 11 and 12, whereby a manufacturing process will be easy.

Although the pair of primary coils 11 and 12 is integrally molded in the fourth embodiment, it may individually be molded. FIG. 14 is a sectional view of mold coils 101 and 102 according to a fifth embodiment of the present invention.

In the present figure, the mold coil 101 is provided with a primary coil 11 and a core 31 buried in a resin 120, a first thermal conductor 250, a second thermal conductor 140, and a radiator 150. The mold coil 102 is provided with a primary coil 12 and a core 32 buried in a resin 120, a first thermal conductor 250, a second thermal conductor 140, and a radiator 150. The two mold coils 101 and 102 are connected to each other through a cable 115 for series-connecting the pair of primary coils 11 and 12 lying in the resins 120 and 120.

The cable 115 may be buried in the resin 120 together with the coils 11 and 12 in such a manner as to be configured as an integral type. The cable 115 may also be of a detachable type in which mounting ports connected to the coils 11 and 12 are respectively provided at the surfaces of the two mold coils 101 and 102, and the pair of primary coils are connected to each other through the mounting ports.

When the mold coils 101 and 102 are configured as in the present embodiment, the primary coils 11 and 12 can readily be laid out matched with the specifications of the charging facility. The above description has been made of the case where the primary coils 11 and 12 in the power feeder 51 are molded, but the secondary coil 13 in the power receiver 14 may also be molded in like manner.

Although each of the embodiments mentioned above has described where the two primary coils 11 and 12 are arranged in the vehicle cross-machine direction to configure the power feeder 51 from the relationship with the concave portion (charging position instruction means) 70 installed in the charging facility 50, the two primary coils 11 and 12 may be disposed in other directions (e.g., the length direction of the electric operation machine 40) to configure the power feeder 51. In this case, the direction of arrangement of the two primary coils 11 and 12 is the main direction that allows the positional displacement.

The power receiver 41 shown in FIG. 1 is installed at the bottom face of the electric operation machine 40 to oppose the ground 60 in which the power feeder 51 is buried, but is preferably arranged opposite to the power feeder 51 or may be located in other place in accordance with the installation position of the power feeder 51. For example, when the power feeder 51 is disposed at the side face of the electric operation machine 40, the power receiver 41 may be disposed at the side face of the electric operation machine 40 to oppose the power feeder 51. When the power feeder 51 is disposed above the electric operation machine 40, the power feeder 41 may be placed on the upper surface of the electric operation machine 40. The power feeder 51 shown in FIG. 1 is buried in the ground (road surface) 60, but may be disposed in other place if arranged opposite to the power receiver 41 as mentioned above.

Further, the arrangement of a plurality of the primary coils in the above respective embodiments was such that the main magnetic force lines of the annular magnetic field formed thereby could be drawn by the closed curves (such as ellipses and circles) line-symmetric with the predetermined straight line. The arrangement, however, is not limited to such. As long as the magnetic force lines passing through all of the inner portions (the inside of the ring) of the respective primary coils are drawn by closed curves, the present invention is applicable even with other arrangements.

There is known, for example, a plurality of primary coils arranged on a predetermined closed curve positioned on a predetermined surface, such that the closed curve contacts the central axes of the respective primary coils while arranging the primary coils in such a manner that the center points thereof are placed in different positions on the predetermined closed curve. When electric current is fed to the respective primary coils in the same direction on the basis of the direction in which the closed curve penetrates through the rings of the primary coils with respect to the primary coils arranged on the closed curve in this way, a magnetic field having magnetic force lines along approximately the closed curve is formed, whereby the magnetic field will be an annular one that passes through the inside of all plural rings formed by the primary coils with an electric wire.

It is to be noted that the present invention is not limited to the aforementioned embodiments, but covers various modifications. While, for illustrative purposes, those embodiments have been described specifically, the present invention is not necessarily limited to the specific forms disclosed. Thus, partial replacement is possible between the components of a certain embodiment and the components of another. Likewise, certain components can be added to or removed from the embodiments disclosed.

## Claims

1. An inductive power supply system for an electric operation machine (40) comprising:
a pair of primary coils (11, 12) that are connected in series circuit and generate a magnetic dipole at energization;
a secondary coil (13) mounted to the electric operation machine in such a manner as to be able to be interlinked to a magnetic flux (21) generated by the primary coils (11, 12) at the energization of the primary coils (11, 12);
a control device (52) that allows energization of alternate current to the pair of primary coils (11, 12) only when a horizontal distance between the primary coils (11, 12) and the secondary coil (13) falls within a predetermine range;
plate-like primary-side magnetic materials (31, 32) each disposed on end faces farther from the secondary coil (13), of respective two end faces of the primary coils (11, 12);
a secondary-side magnetic material (33) disposed inside the secondary coil (13);
primary-side shielding materials (81) that are each disposed on the end faces farther from the secondary coil (13), of the respective two end faces of the primary coils (11, 12), and shields a leakage flux; and
a secondary-side shielding material (82) that is mounted to the electric operation machine (40) in such a manner as to be placed between the secondary coil (13) and the electric operation machine (40), and shields a leakage flux.

2. The inductive power supply system according to claim 1, wherein
the primary coils (11, 12) are arranged in such a manner that central axes (A11, A12) of the primary coils (11, 12) are both held substantially vertically, and
each of the primary-side magnetic materials (31, 32) is one plate material or a plate material formed by combining a plurality of materials.

3. The inductive power supply system according to claim 1 or 2 further comprising:
a resin (120) in that the primary coils (11, 12) are buried;
a first thermal conductor (250) buried in the resin (120) with the primary coils (11, 12) and larger in thermal conductivity than the resin (120); and
a second thermal conductor (140) in contact with the first thermal conductor (250) inside the resin (120) and exposed to the outside of the resin (120).

4. The inductive power supply system according to claim 3 further comprising a radiator (150) mounted to the second thermal conductor (250) outside the resin (120).

5. The inductive power supply system according to any one of the preceding claims, wherein the secondary coil (13) is fixed to the electric operation machine (40) in such a manner that a central axis (A13) of the secondary coil (13) is disposed in a cross-machine direction of the electric operation machine (40).

6. The inductive power supply system according to claim 2, wherein
the central axis (A13) of the secondary coil (13) is held in the cross-machine direction of the electric operation machine (40),
when the electric operation machine (40) is moved in such a manner that a straight line (L) passing through a center of the primary coils (11, 12) and a central axis (A13) of the secondary coil (13) are placed on a same plane, the straight line (L) is parallel with the central axis (A13) of the secondary coil (13), and
when a horizontal distance from a middle point of a line formed by connecting central points (C11, C12) of the primary coils (11, 12) to each other to the center point (C13) of the secondary coil (13) falls within less than or equal to half of a center-to-center distance between the primary coils (11, 12), the control device (52) allows energization of alternate current to the primary coils (11, 12).

7. An inductive power supply system comprising:
a power feeder (51) having a pair of primary coils (11, 12) that are connected in series circuit and generates a magnetic dipole at energization, the power feeder (51) being fixed to the ground (60);
a power receiver (41) having a secondary coil (13) disposed in such a manner as to be interlinked to a magnetic flux (21) generated by the primary coils (11, 12) at energization of the primary coils (11, 12), the power receiver (41) being mounted to an electric operation machine (40) ;
a control device (52) that controls alternate current energized to the primary coils (11, 12);
plate-like primary-side magnetic materials (31, 32) each disposed on end faces farther from the secondary coil (13), of respective two end faces of the primary coils (11, 12);
a secondary-side magnetic material (33) disposed inside the secondary coil (13);
primary-side shielding materials (81) that are each disposed on the end faces farther from the secondary coil (13), of the respective two end faces of the primary coils (11, 12), and shield a leakage flux; and
a secondary-side shielding material (82) that is mounted to the electric operation machine (40) in such a manner as to be placed between the secondary coil (13) and the electric operation machine (40), and shields a leakage flux, wherein
a central axis (A13) of the secondary coil (13) is held in a cross-machine direction of the electric operation machine (40),
when the electric operation machine (40) is moved in such a manner that a straight line (L) passing through the center of the primary coils (11, 12) and the central axis (A13) of the secondary coil (13) are placed on the same plane, the straight line (L) is parallel with the central axis (A13) of the secondary coil (13), and
the control device (52) allows energization of alternate current to the primary coils (11, 12) only when a horizontal distance between the primary coils (11, 12) and the secondary coil (13) falls within a predetermine range.

8. The inductive power supply system according to claim 7, wherein when a horizontal distance from a middle point of a line formed by connecting central points (C11, C12) of the primary coils (11, 12) to each other to the center point (C13) of the secondary coil (13) falls within less than or equal to half of the center-to-center distance between the primary coils (11, 12), the control device (52) allows energization of alternate current to the primary coils (11, 12).
